# EUROPÄISCHE PATENTSCHRIFT

(11) **EP 2 510 573 B1**
(45) Veröffentlichungstag und Bekanntmachung des Hinweises auf die Patenterteilung: **02.12.2015**
(21) Anmeldenummer: 10798746.3
(22) Anmeldetag: 07.12.2010
(51) Int. Cl.: H01M 12/06, H01M 12/08, H01M 4/134, H01M 4/86

(54) **BATTERIE**
BATTERY
BATTERIE

(30) Priorität: 10.12.2009 DE 102009057720
(43) Veröffentlichungstag der Anmeldung: 17.10.2012
(73) Patentinhaber: Siemens Aktiengesellschaft, 80333 München (DE)
(72) Erfinder: LANDES, Harald, 90607 Rückersdorf (DE); ZAMPIERI, Alessandro, Singapore 138642 (SG)
(86) Internationale Anmeldenummer: PCT/EP2010/069059
(87) Internationale Veröffentlichungsnummer: WO 2011/070006

(56) Entgegenhaltungen:
- EP-A1- 0 807 322
- WO-A1-98/15023
- US-A- 4 204 033
- US-A- 5 213 908
- US-A1- 2005 089 738

## Beschreibung

Die Erfindung betrifft eine Batterie nach dem Oberbegriff des Patentanspruchs 1.

Wiederaufladbare Batterien, beispielsweise auf Lithiumionenbasis, haben in der mobilen Welt eine stetig zunehmende Bedeutung erlangt. Dabei geht es insbesondere darum, die Energiedichte, die man einspeichern kann, stetig zu erhöhen. Durch die stetig erhöhte Energiedichte werden auch die Gefahr eines inneren Kurzschlusses und die daraus resultierende spontane Energieentladung immer größer. Im unglücklichsten Fall kann eine spontane Energieentladung einer Batterie zu Bränden führen, die beträchtlichen Schaden für die Umgebung ausrichten können. Aus der US 4,024,038 ist eine Batterie mit wiederaufladbaren Zellen bekannt, welche eine Prozessgasführung und ein Reservoir, gefüllt mit einem Metalloxid und Wasserstoff, enthalten. Ähnliche Vorrichtungen sind aus der US 2005/0089738 A1, der EP 0 807 322 B1, sowie der US 5,213,908 bekannt.

Aufgabe der Erfindung ist es, eine Batterie mit einer möglichst hohen Energiedichte darzustellen, die dabei eine hohe Prozesssicherheit aufweist.

Die Lösung der Aufgabe besteht in einer Batterie nach dem Patentanspruch 1.

Der Patentanspruch 1 umfasst eine Batterie mit einer ersten Elektrode, im Entladungsprozess der Batterie einer Kathode und einer zweiten Elektrode, die im Entladungsprozess die Anode darstellt, zwischen denen ein Festkörperelektrolyt angeordnet ist, wobei eine kathodenseitige Prozessgaszuführung erfolgt. Die Erfindung zeichnet sich dadurch aus, dass an der Oberfläche der zweiten Elektrode ein bezüglich der zweiten Elektrode offenes und bezüglich einer Umgebung abgeschlossenes Reservoir angeordnet ist, das zum einen ein poröses, also gasdurchlässiges, oxidierbares Material sowie ein bei einer Betriebstemperatur der Batterie gasförmiges Redoxpaar auf der Basis von Wasserstoff und Wasser beinhaltet, und eine Reaktion zwischen dem Wasser und dem oxidierbaren Material stattfindet. An der zweiten Elektrode ist ein elektrisch leitfähiger Tragkörper angeordnet, der das Reservoir umschliesst und die zweite Elektrode elektronisch kontaktiert, um den Strom zur ersten Elektrode einer angrenzenden Zelle zu übertragen. Unter dem Begriff bezüglich einer Umgebung abgeschlossen wird hierbei das Gegenteil der Prozessgaszuführung in der Regel in Form von Luft aus der Atmosphäre verstanden. Die zweite Elektrode ist somit insbesondere von der freien Atmosphäre abgeschlossen.

Unter einer Anode versteht man die Elektrode, an der eine Oxidationsreaktion stattfindet. Es werden Elektronen aus einer chemischen Reaktion aufgenommen und über einen elektrischen Anschluss abgegeben. Eine elektrochemische Reaktion findet immer an einer Phasengrenze zwischen einer Elektrode, einem ionenleitenden Festkörperelektrolyt oder einer Elektrolytlösung statt. Daher ist bei Elektrolysen die Anode die positive Elektrode. (Elektrolysen verbrauchen elektrische Energie.)

Bei elektrochemischen Elementen, wie der hier beschriebenen Batterie, die elektrische Energie erzeugen, finden an der Anode Oxidationsvorgänge statt, d. h. die aus dem Elektrolyten kommenden Anionen (negativ geladene Ionen) werden entladen und neutrale Atome werden zu Kationen. Werden die Anode und Kathode nun zu einem Stromkreis verbunden, fließen über diese äußere Verbindung Elektronen zur Kathode, in diesem äußeren Stromkreis wirkt die Anode dann als Minuspol (dieser Effekt tritt wie im Folgenden beschrieben bei Batterien oder auch bei Brennstoffzellen auf).

Bei einer wiederaufladbaren Batterie (wie sie in diesem Fall vorliegt) kann dieselbe Elektrode abwechselnd als Anode oder Kathode arbeiten, je nachdem ob die Batterie geladen oder entladen wird. Jede Elektrode behält aber das Vorzeichen ihres Potentials bei, so dass die positive Elektrode beim Entladen der Batterie als Kathode arbeitet, beim Laden der Batterie aber als Anode. Die negative Elektrode arbeitet beim Entladen als Anode und beim Laden als Kathode.

Damit ist dann die luftseitige Elektrode die positive Elektrode und die Elektrode auf der Seite des oxidierbaren Materials ist die negative Elektrode.

Im Weiteren wird, sofern nichts Gegenteiliges erwähnt wird, der Entladungszustand der Batterie beschrieben und der Begriff erste Elektrode mit dem Begriff Kathode gleichgesetzt und der Begriff zweite Elektrode mit dem Begriff Anode.

Das Reservoir mit dem oxidierbaren Material ist in einer bevorzugten Ausgestaltungsform der Erfindung in einer Kammer angeordnet, die durch einen Tragkörper gebildet wird, der wiederum an der Anode angebracht ist. Das oxidierbare Material liegt bevorzugt in einer porösen Form vor. Da dieses Material beim Entladen der Batterie durch Sauerstoffaufnahme sein Volumen vergrößert und damit sich von einer sauerstoffionenleitenden Festkörperstruktur (z. B. dem Elektrolyten) ablösen könnte, wird der Sauerstoff vorzugsweise über Diffusion des gasförmigen Redoxpaares dem oxidierbaren Material zugeführt. Das Redoxpaar wird dabei an der Anode durch Aufnahme von Sauerstoff aus dem Elektrolyten regeneriert. Das oxidierbare Material ist dabei bevorzugt unedler als das Material in der Anode gewählt, so dass dieses damit vor Oxidation geschützt ist, was zum Verlust der Leitfähigkeit der Anode und ihrer mechanischen Zerstörung führen könnte.

Die Leistungsabgabe der Batterie ist auf eine kathodenseitige Prozessgaszuführung angewiesen, wobei bei Abreißen dieser Prozessgaszuführung jegliche Entladereaktionen sofort unterbunden werden, insbesondere weil sich mit Luft als Prozessgas ein Stickstoffpolster in den Gaszuführungen der Kathodenseite ausbildet, das auch z. B. beim Bruch des Elektrolyten das oxidierbare Material durch lange Diffusionswege vor weiterem Sauerstoffangriff schützt. Die erfindungsgemäße Batterie weist somit bei einer sehr hohen Energiedichte eine deutlich höhere Sicherheit auf als eine herkömmliche wiederaufladbare Batterie, bei der beide Reaktanden gespeichert vorliegen.

In einer bevorzugten Ausgestaltungsform der Erfindung weist das Anodenmaterial gleichzeitig elektrische und ionische Leitfähigkeit auf, wobei beide Leitfähigkeitstypen in einer einzigen Phase oder auch in mehreren Phasen vorliegen können. Hierbei versteht man unter einem elektrisch leitfähigen Material ein Material, das wie ein Metall eine elektrische Leitung durch Elektronenfluss aufweist. Ein elektrolytisch leitendes Material hingegen weist eine Leitung durch reinen Ionentransport auf.

Es hat sich zudem als zweckmäßig herausgestellt, das Anodenmaterial in Form eines Metallkeramikverbundmaterials, insbesondere eines so genannten Cermets, auszugestalten. Durch die Verwendung eines Metallkeramikverbundmaterials kann ein elektrisch leitendes Metall in Verbindung mit einem elektrolytisch leitenden Material, beispielsweise eines dotierten Metalloxids, erfolgen. Ein einphasiges System hat aber den Vorteil, dass für beide Leitfähigkeitstypen das gesamte Volumen zur Verfügung steht, was den Widerstand senkt.

Es hat sich ferner ebenfalls als zweckmäßig herausgestellt, wenn das elektrisch leitfähige Material der Anode eine größere Elektronegativität aufweist (bzw. erst bei einem höheren Sauerstoffpartialdruck oxidiert werden kann) als das oxidierbare Material im Reservoir bzw. in der Kammer des Tragkörpers. Das oxidierbare Material in der Kammer des Tragkörpers dient dazu, das Prozessgas chemisch zu speichern und soll durch das gasförmig transportierte Redoxpaar aufoxidiert werden. Dieser Prozess ist chemisch leichter auszugestalten, wenn dieses Material eine geringere Elektronegativität hat als das leitfähige Material der Anode, damit dieses Material der Anode nicht unnötig in eine Redoxreaktion hineingezogen wird. In diesem Zusammenhang ist es auch zweckmäßig, dass das zu oxidierende Material der Kammer ein Metall ist.

In einer weiteren Ausgestaltungsform der Erfindung umfasst das elektronisch leitfähige Material der Anode ein Metall wie Nickel, Mangan, Molybdän, Wolfram oder Eisen. Hierbei ist wiederum bevorzugt darauf zu achten, wie bereits erwähnt, dass bei der Auswahl der Paarung Anodenmetall bzw. oxidierbares Material das Anodenmetall eine höhere Elektronegativität aufweist als das zu oxidierende Material.

In diesem Zusammenhang ist es auch zweckmäßig, dass das oxidierbare Material in der Kammer ein Metall ist. Hierbei haben sich die Metalle Lithium, Mangan, Eisen oder Titan bzw. eine Legierung aus diesen Metallen bewährt.

Bei der Betriebstemperatur der Batterie, die insbesondere bevorzugt zwischen 600°C und 800°C liegt, besteht das Redoxpaar erfindungsgemäss aus Wasserstoff und Wasserdampf. Hierbei kommt es im weiteren Verlauf zu einer Reaktion zwischen dem (gasförmigen) Wasser mit dem oxidierbaren Material in der Kammer. Hierbei wird das oxidierbare Material von dem Wasser aufoxidiert, wobei in der Regel ein Metalloxid und Wasserstoff entsteht.

In einer Ausgestaltungsform der Erfindung ist in der Batterie auf der positiven Seite ein Prozessgasverteiler angeordnet, der in vorteilhafter Weise das Prozessgas, in der Regel Luft, gleichmäßig an der Kathode verteilt.

In einer anderen vorteilhaften Ausgestaltungsform der Erfindung weist der Tragkörper einen U-förmigen Querschnitt auf, der mit gegebenenfalls durchbrochenen Stegen durchzogen ist, so dass einerseits zur Anode hin durchgängige Hohlräume entstehen, die den Gastransport des Redoxpaares ermöglichen.

In Hohlräumen (die auch als Poren ausgebildet sein können) kann das oxidierbare Material, also bevorzugt eines der Metalle Lithium, Mangan, Eisen oder Titan, bevorzugt in einer oberflächenreichen Form eingelagert sein.

Die Kammer ist dabei wiederum in einer bevorzugten Ausgestaltungsform zur Anode hin offen, damit der Strom des Redoxpaares möglichst ungehindert in die Kammer mit dem oxidierbaren Material gelangen kann.

In einer weiteren Ausgestaltungsform der Erfindung handelt es sich bei dem Prozessgas um Sauerstoff, der an der Anodenoberfläche mit dem Reaktionspartner Wasserstoff zu Wasser reagiert. Hierbei wird das Wasser, das bei der Prozesstemperatur der Batterie in gasförmigem Dampf vorliegt, zu dem oxidierbaren Material, also bevorzugt zu einem Metall geleitet, das wiederum bei der Prozesstemperatur der Batterie zu dem Metalloxid aufoxidiert wird und bei dieser Reaktion Wasserstoff in molekularer Form entsteht, der wieder zurück zur Anode wandert und hierbei erneut mit dem Prozessgas Sauerstoff, der in ionischer Form vorliegt, zu Wasser reagiert.

Grundsätzlich sind jedoch auch andere Redoxpaare, beispielsweise auch auf metallischer Basis, die nach der chemischen Formel

X + O₂ → XO₂

reagieren, für das erfindungsgemäße Verfahren zweckmäßig.

Ferner handelt es sich bei dem Verfahren zum Betreiben einer Batterie bevorzugt um eine wiederaufladbare Batterie, wobei die Polarisierung von Anode und Kathode zum Ladeprozess der Batterie vertauscht wird und der Redoxprozess in entgegengesetzter Richtung verläuft, wobei das oxidierte Material wieder reduziert wird.

Weitere vorteilhafte Ausgestaltungsformen der Erfindung werden anhand der folgenden Figuren näher erläutert, dabei zeigen:
- Figur 1: eine schematische Darstellung einer wiederaufladbaren Batterie mit einem Festkörperelektrolyt, und
- Figur 2: eine schematische Darstellung einer Batterie mit Festkörperelektrolyt und einem Reservoir an oxidierbarem Material.

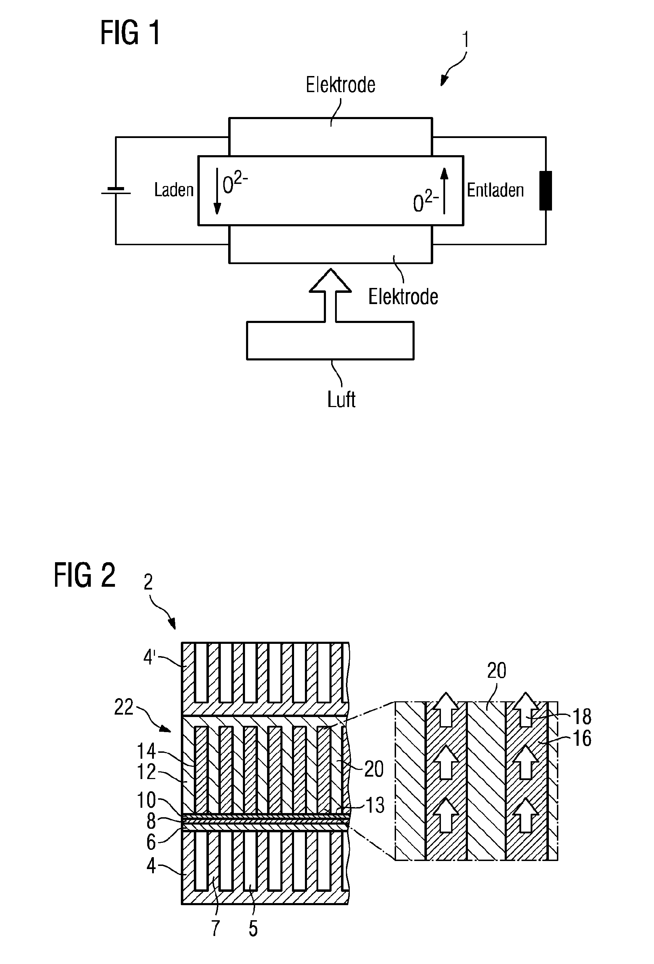

In der Figur 1 ist eine schematische Darstellung einer wiederaufladbaren Batterie 1 mit einem Oxidionentransport, eine so genannte Rechargeable Oxide-Ion Battery (ROB), dargestellt, auf deren Prinzip auch die hier beschriebene Batterie beruht.

Diese umfasst eine Elektrode, die im Entladeprozess die Kathode bildet, wobei der Kathode ein kontinuierlicher Luftstrom zugeführt wird, der das so genannte Prozessgas darstellt. Ferner umfasst die Batterie eine weitere Elektrode, im Entladungsprozess der Batterie die Anode, die von der Kathode durch einen Festkörperelektrolyten getrennt ist, wobei zwischen Anode und Kathode ein ionischer Transport von Sauerstoff (O²⁻) erfolgt.

Dieser Sauerstoff-Ionen-Fluss erfolgt im Entladungsprozess von der Kathode (Prozessgaselektrode) zur Anode (über das Redoxpaar an das oxidierbare Metall gekoppelt), im Ladungsprozess in umgekehrter Richtung, wobei aber die Polarität der Elektroden erhalten bleibt. Die Betriebstemperatur dieser Batterie liegt zwischen 500°C und 800°, insbesondere bei etwa 600°C. Diese Temperatur ist insbesondere für den ionischen Transport im Festkörperelektrolyt zweckmäßig.

Eine Ausgestaltungsform einer derartigen Batterie ist in Figur 2 näher erläutert. Figur 2 zeigt eine Batterie 2 mit einem Gasverteiler 4, der Führungsrippen 7 aufweist, zwischen denen sich Gaskanäle 5 befinden. Das Prozessgas wird durch die Gaskanäle 5 geleitet und an eine Kathode 6 (erste Elektrode) geführt. An der Kathode 6 wird das Prozessgas, beispielsweise der Sauerstoff aus der Luft, zu O²⁻-Ionen reduziert und durch einen Festkörperelektrolyt 8 durch ionische Leitung zu einer Anode 10 (zweite Elektrode) geführt. Der Festkörperelektrolyt besteht in vorteilhafter Weise aus einem Metalloxid, wie z. B. Zirkonoxid oder Ceroxid, das wiederum mit einem Metall, z. B. Scandium, dotiert ist. Das Dotierungsmaterial dient zur Erzeugung von Sauerstoff-Leerstellen im Festelektrolyten zum Transport des ionisierten Gases, z. B. des O²⁻.

An der Anode 10 befindet sich an der Oberfläche ein gasförmiges Reduktionsmittel, das insbesondere als molekularer Wasserstoff (H₂) vorliegen kann, mit dem der ionische Sauerstoff O²⁻ zu H₂O gemäß nachfolgender Gleichung reagiert:

H₂ + O²⁻ → H₂O + 2e- (Gl. 1)

Die dabei frei werdenden Elektronen fließen über einen elektronisch leitfähigen Tragkörper 12 (beispielsweise aus Edelstahl) und über eine bipolare Platte 13 zu der Nachbarzelle ab. Dieser Überschuss an Elektronen beim Entladen der Zelle an der Anode gepaart mit dem Mangel an Elektronen an der Kathode führt zu einem elektrischen Stromfluss im Außenkreis der Batterie.

Der Gasverteiler 4 weist mit seinen Gaskanälen 5, die zwischen den Führungsrippen 7 angeordnet sind, eine Gesamthöhe in der Größenordnung von etwa 1 mm auf. Die auf dem Gasverteiler 4 aufgebrachte Kathode hat eine Dicke in der Größenordnung von etwa 100 µm. Die Kathode kann beispielsweise aus einem Perowskit, beispielsweise LaSrMnO₄, bestehen. Auf der Kathode 6 wiederum ist der Elektrolyt 8 aufgebracht, der üblicherweise eine Schichtdicke zwischen 30 µm und 50 µm, bevorzugt von 40 µm, aufweist. Dieser Elektrolyt kann bevorzugt aus einem metalldotierten Metalloxid, wie bereits beschrieben, bestehen. Auf den Elektrolyten 8 folgt die Anode 10, die eine Schichtdicke zwischen 40 µm und 60 µm, bevorzugt 50 µm, aufweist. Die Anode ist bevorzugt aus einem Metallkeramikverbundmaterial, einem so genannten Cermet, ausgestaltet. Die Anode 10 weist dabei metallische Phasen auf, die eine elektronische Leitfähigkeit gewährleisten. Vorteilhafte Metalle für die metallische Phase der Anode sind Lithium, Mangan, Eisen, Titan oder Nickel. Zudem weist die Anode gegebenenfalls eine elektrolytisch leitende Phase in Form eines Metalloxides auf, diese kann beispielsweise in Form von Zirkonoxid ausgestaltet sein.

In üblichen Festkörperbatterien nach dem Stand der Technik, die ebenfalls über einen Festkörperelektrolyten ein ionisiertes Gas, wie Sauerstoff (O²⁻), transportieren, erfolgt die Reaktion des negativ geladenen Sauerstoffes zum Oxid des Materials der Anode, wobei dieses aufoxidiert wird. Dadurch wird das Anodenmaterial verbraucht (aufoxidiert). Wenn das leitfähige Anodenmaterial verbraucht ist, ist die Batterie entladen. In der vorliegenden Batterie wird jedoch an der Anodenoberfläche ein Reaktionspartner für die Sauerstoffionen zur Verfügung gestellt, der in Form von Wasserstoff vorliegt. Wie bereits erwähnt, reagiert der Sauerstoff mit dem Wasserstoff unter Abgabe von Elektronen, wobei an der Anodenoberfläche ein Gleichgewicht von H₂ und H₂O vorliegt. Hierbei handelt es sich um ein Redoxpaar, das bei der Betriebstemperatur der Brennstoffzelle in gasförmiger Form vorliegt.

Nun ist an einer Oberfläche 13 der Anode 10 ein elektronisch leitfähigen Tragkörper 12 angebracht, der gegebenenfalls durchbrochene Stege 20 aufweist, die wiederum Kammern 16 voneinander trennen (vgl. auch vergrößerten Ausschnitt der Figur 2). Diese Kammern 16 sind mit einem oxidierbaren Material, bevorzugt in Form eines elementaren Metalles, gefüllt. Dieses elementare Metall, das bevorzugt aus der Gruppe von Lithium, Mangan, Eisen oder Titan besteht, liegt als Pulver oder als poröser Presskörper vor. Das Redoxpaar H₂/H₂O, das in gasförmiger Phase als Trägermaterial für den Sauerstoff dient, diffundiert (vgl. Pfeile 18) durch die Kammer 14 (Hohlraum) in das oxidierbare Material 16 durch dessen Porosität hindurch und reagiert mit dem oxidierbaren Material 16 nachfolgender Gleichung:

y H₂O + x Me → MeₓO_{y} + y H₂, (Gl. 2)

wobei Me für ein Metall steht. Das Metall Me sollte bevorzugt eine geringere Elektronegativität aufweisen als das Metall der Anode 10, das dort die elektronisch leitende Phase bildet. Wenn dies der Fall ist, ist die Neigung des ionisierten Sauerstoffes mit dem H₂ zu reagieren und das daraus entstandene H₂O wiederum mit dem oxidierbaren Metall 16 zu reagieren höher, als mit dem Anodenmetall zu reagieren, wodurch das Anodenmaterial vor Oxidation geschützt wird.

Der bei dieser Reaktion entstehende molekulare Wasserstoff H₂ wandert wieder zurück zur Anode 10 und reagiert erneut an der Anode 10 mit dem dort auftretenden ionischen Sauerstoff O²⁻.

Da das günstigste Prozessgas jedoch Luft bzw. der darin enthaltene Luftsauerstoff ist, sollte ein Redoxpaar nach folgender Reaktionsgleichung ablaufen.

n X + m/2 O₂ → XₙOₘ, (Gl. 3)

wobei X ein weiteres geeignetes chemisches Element sein kann. Diese chemische Reaktionsgleichung sollte folgende Eigenschaften erfüllen:
1.

   ΔG_{X, Xn0y} ≈ ΔG_{Me, MepOq} (Gl. 4)

   d.h., die bei der Reaktion frei werdende Gibb'sche freie Enthalpie (der Reaktion des Redoxpaares X:XO₂) soll in etwa der freien Gibb'schen Enthalpie der Reaktion zwischen dem Metall und dem Metalloxid entsprechen, das durch die Aufoxidation des Metalles Me gemäß Gleichung 2 entsteht.
2. Der Partialdruck pₓ und der Partialdruck p_{XnOm} müssen groß genug sein, um eine Stromdichte im Bereich von etwa 0,04 A/cm² zu erzielen. So muss bei dem Redoxpaar H₂/H₂O aus gaskinetischen Gründen die im Gleichgewicht beim Potential der negativen Elektrode mit dem geringeren Druck vorliegende Komponente mindestens 10⁻⁸ bar erreichen. Dies führt z. B. für eine Manganelektrode bei 600°C (1,25 V) auf mindestens P_{H2O} = 10⁻⁸ bar und p_{H2} = 10⁻⁵ bar. Vorteilhaft ist es dementsprechend, die Partialdrücke wie folgt zu wählen: p_{H2} = 1 bar und P_{H2O} = 10⁻³ bar.

Der Vorteil eines derartigen Batterieaufbaus besteht darin, dass eine hohe Stromdichte erzielt werden kann. Ferner ist der Reaktionsablauf von dem einströmenden Prozessgas abhängig. Sobald der Strom an Prozessgas abbricht, kann die Batterie keinen Strom mehr erzeugen und es kann auch nicht zu einer unkontrollierten Entladung mit unkontrollierter Wärmeentwicklung bis hin zu einem Brand führen.

Der Aufbau der Batterie 2 eignet sich auch insbesondere zu einem Stapelaufbau, was in Figur 2 dadurch angedeutet wird, dass oberhalb des Tragkörpers 12 wieder ein weiterer Gasverteiler 4' angeordnet ist, der den unteren Teil einer weiteren Zelle darstellt. Die Grundfläche einer Zelle kann beispielsweise 150 mm x 150 mm betragen.

Die gesamte Batterie 2 ist thermisch isoliert und gekapselt angeordnet, da die Betriebstemperatur in etwa bei 600°C liegt. Bei Rekuperation der im Prozessabgas mitgeführten Wärme auf die Prozessgaseingangsseite durch einen Wärmetauscher und einem hinreichend großen Volumen-zu-Oberflächenverhältnis bei guter Isolierung der gesamten Batterie 2 kann die Aufrechterhaltung der Betriebstemperatur allein durch die zwangsläufig auftretende Verlustleistung durch die inneren Widerstände in der Batterie erhalten werden. Gegebenenfalls muss im lastfreien Betrieb ein kleiner Strom aufrecht erhalten werden, um ein langsames Auskühlen zu verhindern.

Eine derartige beschriebene Batterie eignet sich insbesondere als stationärer Energiespeicher im Dauerbetrieb. Sie kann jedoch auch dazu dienen, überschüssige Netzenergie aufzunehmen, die beispielsweise dann entsteht, wenn Windkrafträder oder andere erneuerbare Energiequellen Energie produzieren, und diese Energie im Netz nicht benötigt werden sollte. Somit kann überschüssige Energie aus erneuerbaren Energiequellen in derartigen Batterien eingespeist werden.
- Zum Einspeisen von Energie in eine derartige Batterie 2, also zum Aufladen der Batterie 2, wird die Stromrichtung zwischen der ersten und der zweiten Elektrode umgedreht, die erste Elektrode wird zur Anode, die zweite Elektrode wird zur Kathode. Dadurch werden Elektronen im Bereich des Tragkörpers 12 bzw. des in diesem Fall oxidierten Materials im MeₘOₙ (vgl. Gl. 2) eingeleitet werden, wobei das MeₘOₙ zu Me reduziert wird. Der gesamte Reaktionsprozess wird insofern umgedreht, dass über die zweite Elektrode 10 durch den Elektrolyten 8 der Transport von ionischem Sauerstoff O²⁻ in Richtung erster Elektrode 6 erfolgt, dort geben die Sauerstoffionen wieder ihre negative Ladung ab und verlassen die Elektrode (jetzt Anode) als Sauerstoffgas in Richtung Gasverteiler 4.

## Patentansprüche

1. Batterie mit einer ersten Elektrode (6) und einer zweiten Elektrode (10), zwischen denen ein Festkörperelektrolyt (8) angeordnet ist, mit einer Prozessgaszuführung an der ersten Elektrode, an der Oberfläche der zweiten Elektrode ein bezüglich der zweiten Elektrode offenes und bezüglich einer Umgebung abgeschlossenes Reservoir angeordnet ist, das zum einen ein gasdurchlässiges, oxidierbares Material (16) sowie ein bei einer Betriebstemperatur der Batterie gasförmiges Redoxpaar beinhaltet, wobei das Redoxpaar auf der Basis von Wasserstoff und Wasser besteht und eine Reaktion zwischen dem Wasser und dem oxidierbaren Material stattfindet **dadurch gekennzeichnet, dass** an der zweiten Elektrode ein elektrisch leitfähiger Tragkörper (12) angeordnet ist, der das Reservoir umschließt und die zweite Elektrode elektronisch kontaktiert.

2. Batterie nach Anspruch 1, **dadurch gekennzeichnet, dass** der Tragkörper (12) mindestens eine Kammer (14) bildet, in der das Reservoir des oxidierbaren Materials eingebracht ist.

3. Batterie nach einem der Ansprüche 1 bis 2, **dadurch gekennzeichnet, dass** zumindest ein elektrisch leitfähiger Materialanteil der zweiten Elektrode (10) eine größere Elektronegativität aufweist als das oxidierbare Material in der Kammer des Tragkörpers.

4. Batterie nach einem der vorhergehenden Ansprüche, **dadurch gekennzeichnet, dass** das oxidierbare Material (16) ein Metall ist.

5. Batterie nach Anspruch 4, **dadurch gekennzeichnet, dass** das oxidierbare Material (16) auf der Basis von Lithium, Mangan, Eisen oder Titan oder einer Legierung aus diesen Metallen besteht.

6. Batterie nach einem der vorhergehenden Ansprüche, **dadurch gekennzeichnet, dass** das Material der zweiten Elektrode (10) die Materialien Nickel, Mangan, Molybdän, Wolfram oder Eisen umfasst.

7. Batterie nach einem der vorhergehenden Ansprüche, **dadurch gekennzeichnet, dass** eine Prozessgaszuführung durch einen an der ersten Elektrode angeordneten Prozessgasverteiler (4) erfolgt.

8. Batterie nach einem der vorhergehenden Ansprüchen, **dadurch gekennzeichnet, dass** das Prozessgas Luft ist.

9. Batterie nach einem der vorhergehenden Ansprüchen, **dadurch gekennzeichnet, dass** der Tragkörper (12) einen u-förmigen Querschnitt aufweist, der mit einem oder mehreren Stegen (20) durchzogen ist, die mindestens zwei Kammern (14) voneinander abtrennen.

## Claims

1. Battery having a first electrode (6) and a second electrode (10) between which a solid state electrolyte (8) is arranged, with process gas being supplied to the first electrode, a reservoir which is open to the second electrode and closed to an environment and comprises a gas-permeable, oxidizable material (16) and a redox pair which is gaseous at an operating temperature of the battery is arranged on the surface of the second electrode, where the redox pair is based on hydrogen and water and a reaction between the water and the oxidizable material takes place, **characterized in that** an electrically conductive support body (12) which encloses the reservoir and provides electronic contact to the second electrode is arranged on the second electrode.

2. Battery according to Claim 1, **characterized in that** the support body (12) forms at least one chamber (14) in which the reservoir of the oxidizable material is accommodated.

3. Battery according to either of Claims 1 and 2, **characterized in that** at least one electrically conductive material component of the second electrode (10) has a greater electronegativity than the oxidizable material in the chamber of the support body.

4. Battery according to any of the preceding claims, **characterized in that** the oxidizable material (16) is a metal.

5. Battery according to Claim 4, **characterized in that** the oxidizable material (16) is based on lithium, manganese, iron or titanium or an alloy of these metals.

6. Battery according to any of the preceding claims, **characterized in that** the material of the second electrode (10) comprises the materials nickel, manganese, molybdenum, tungsten or iron.

7. Battery according to any of the preceding claims, **characterized in that** process gas is supplied through a process gas distributor (4) arranged on the first electrode.

8. Battery according to any of the preceding claims, **characterized in that** the process gas is air.

9. Battery according to any of the preceding claims, **characterized in that** the support body (12) has a U-shaped cross section through which one or more projections (20) run and separate the at least two chambers (14) from one another.

## Revendications

1. Batterie comprenant une première électrode (6) et une deuxième électrode (10) entre lesquelles est disposé un électrolyte (8) solide, comprenant une amenée de gaz de processus sur la première électrode, sur la surface de la deuxième électrode est disposé un réservoir qui est ouvert par rapport à la deuxième électrode, qui est fermé par rapport à un environnement et qui contient, d'une part, une matière (16) oxydable perméable au gaz, ainsi qu'un couple rédox gazeux à une température de fonctionnement de la batterie, le couple rédox étant à base d'hydrogène et d'eau et une réaction a lieu entre l'eau et la matière oxydable, **caractérisée en ce qu'**il est disposé sur la deuxième électrode un corps (12) support conducteur de l'électricité, qui entoure le réservoir et qui est en contact électroniquement avec la deuxième électrode.

2. Batterie suivant la revendication 1, **caractérisée en ce que** le corps (12) support forme au moins une chambre (14) dans laquelle est mis le réservoir de la matière oxydable.

3. Batterie suivant la revendication 1 à 2, **caractérisée en ce qu'**au moins une partie de matière conductrice d'électricité de la deuxième électrode (10) a une électronégativité plus grande que la matière oxydable dans la chambre du corps support.

4. Batterie suivant l'une des revendications précédentes, **caractérisée en ce que** la matière (16) oxydable est un métal.

5. Batterie suivant la revendication 4, **caractérisée en ce que** la matière (16) oxydable est constituée à base de lithium, de manganèse, de fer ou de titane ou d'un alliage de ces métaux.

6. Batterie suivant l'une des revendications précédentes, **caractérisée en ce que** la matière de la deuxième électrode (10) comprend les matières nickel, manganèse, molybdène, tungstène ou fer.

7. Batterie suivant l'une des revendications précédentes, **caractérisée en ce qu'**une amenée de gaz de processus s'effectue par un répartiteur (4) de gaz de processus disposé sur la première électrode.

8. Batterie suivant l'une des revendications précédentes, **caractérisée en ce que** le gaz de processus est de l'air.

9. Batterie suivant l'une des revendications précédentes, **caractérisée en ce que** le corps (12) support a une section transversale en forme de U, qui est traversée par une ou par plusieurs barrettes qui séparent les unes des autres au moins deux chambres (14).
